# EUROPÄISCHE PATENTSCHRIFT

(11) **EP 1 945 969 B1**
(45) Veröffentlichungstag und Bekanntmachung des Hinweises auf die Patenterteilung: **13.08.2014**
(21) Anmeldenummer: 06805368.5
(22) Anmeldetag: 06.10.2006
(51) Int. Cl.: F16F 15/16

(54) **DREHSCHWINGUNGSDÄMPFER**
TORSIONAL VIBRATION DAMPER
AMORTISSEUR D'OSCILLATIONS EN TORSION

(30) Priorität: 29.10.2005 DE 102005051871
(43) Veröffentlichungstag der Anmeldung: 23.07.2008
(73) Patentinhaber: Schaeffler Technologies GmbH & Co. KG, 91074 Herzogenaurach (DE)
(72) Erfinder: STRASSER, Pascal, F-67250 Aschbach (FR); MENDE, Hartmut, 77815 Bühl (DE)
(86) Internationale Anmeldenummer: PCT/DE2006/001748
(87) Internationale Veröffentlichungsnummer: WO 2007/048372

(56) Entgegenhaltungen:
- WO-A-99/31405
- DE-A1- 3 815 505
- US-A- 5 863 274
- US-B1- 6 273 823

## Beschreibung

Die Erfindung betrifft einen Drehschwingungsdämpfer, insbesondere ein geteiltes Schwungrad, mit wenigstens zwei entgegen dem Widerstand einer Energiespeichereinrichtung relativ zueinander verdrehbaren Schwungmassen, zwischen denen eine elastische Dichtmembraneinrichtung angeordnet ist.

Derartige Drehschwingungsdämpfer sind beispielsweise durch die WO 99/31405 A und die DE 38 15 505 A1 bekannt geworden.

Aufgabe der Erfindung ist es, einen Drehschwingungsdämpfer gemäß dem Oberbegriff des Anspruchs 1 zu schaffen, der einfach zu montieren ist und eine hohe Lebensdauer aufweist.

Die Aufgabe ist bei einem Drehschwingungsdämpfer, insbesondere einem geteilten Schwungrad, mit wenigstens zwei entgegen dem Widerstand einer Energiespeichereinrichtung relativ zueinander verdrehbaren Schwungmassen, zwischen denen eine elastische Dichtmembraneinrichtung angeordnet ist, dadurch gelöst, dass zwischen der Dichtmembraneinrichtung und der einen Schwungmasse ein Reibring eingespannt ist, der an der einen Schwungmasse befestigt ist. Dadurch wird auf einfache Art und Weise eine stabile Grundreibung zwischen den beiden Schwungmassen erzeugt.

Ein bevorzugtes Ausführungsbeispiel des Drehschwingungsdämpfers ist dadurch gekennzeichnet, dass der Reibring aus Kunststoff gebildet ist. Das verwendete Kunststoffmaterial ist vorzugsweise so gewählt, dass Reibwerte von 0,2 bis 0,4 auftreten.

Ein weiteres bevorzugtes Ausführungsbeispiel des Drehschwingungsdämpfers ist dadurch gekennzeichnet, dass die Dichtmembraneinrichtung mit einem radial äußeren Abschnitt an dem Reibring anliegt. Vorzugsweise wird der Reibring in axialer Richtung durch die Dichtmembraneinrichtung beaufschlagt.

Ein erfindungsgemäßer Drehschwingungsdämpfer ist weiterhin dadurch gekennzeichnet, dass der Reibring durch mindestens ein Schnappverbindungselement an der einen Schwungmasse verdrehgesichert befestigt ist. Die Schnappverbindung ermöglicht auf einfache Art und Weise eine verlier- und verdrehsichere Montage des Reibrings. Vorzugsweise sind zwei oder mehr Schnappverbindungselemente vorgesehen.

Ein weiteres bevorzugtes Ausführungsbeispiel des Drehschwingungsdämpfers ist dadurch gekennzeichnet, dass das Schnappverbindungselement einen Schnapphaken umfasst, der in ein Durchgangsloch eingreift, das in der einen Schwungmasse ausgespart ist. Dadurch wird auf einfache Art und Weise eine Überwachung der Montage, zum Beispiel mit Hilfe einer Überwachungskamera, ermöglicht, um das Vorhandensein eines Reibrings auch dann feststellen zu können, wenn der Reibring nach der Montage durch die Dichtmembraneinrichtung verdeckt ist.

Ein weiteres bevorzugtes Ausführungsbeispiel des Drehschwingungsdämpfers ist dadurch gekennzeichnet, dass das Schnappverbindungselement einen im Wesentlichen U-förmigen Querschnitt mit einer Basis aufweist, von der zwei Schenkel ausgehen. Vorzugsweise erstrecken sich die beiden Schenkel in axialer Richtung.

Ein weiteres bevorzugtes Ausführungsbeispiel des Drehschwingungsdämpfers ist dadurch gekennzeichnet, dass einer der Schenkel, bezogen auf den Reibring, radial außen angeordnet ist und den Schnapphaken bildet. Der Schnapphaken ist vorzugsweise im Spritzgießverfahren einstückig mit dem Reibring verbunden.

Ein weiteres bevorzugtes Ausführungsbeispiel des Drehschwingungsdämpfers ist dadurch gekennzeichnet, dass von dem anderen Schenkel ein Dichtelement ausgeht, das zusammen mit dem anderen Schenkel einen im Wesentlichen U-förmigen Querschnitt aufweist. Die beiden U-förmigen Querschnitte sind in entgegengesetzten Richtungen geöffnet und durch einen gemeinsamen Schenkel einstückig miteinander verbunden.

Ein weiteres bevorzugtes Ausführungsbeispiel des Drehschwingungsdämpfers ist dadurch gekennzeichnet, dass radial außerhalb des Reibrings Zentrierelemente an der einen Schwungmasse vorgesehen sind. Die Zentrierelemente dienen neben dem Zentrieren des Reibrings dazu, den Reibring bei hohen Drehzahlen in radialer Richtung zu fixieren. Dadurch wird ein Durchbiegen und/oder Bersten des Reibrings bei hohen Drehzahlen sicher verhindert.

Ein weiteres bevorzugtes Ausführungsbeispiel des Drehschwingungsdämpfers ist dadurch gekennzeichnet, dass die Zentrierelemente von Zentrierwarzen gebildet werden, die aus der einen Schwungmasse herausstehen. Dadurch wird die Herstellung des Drehschwingungsdämpfers vereinfacht.

Ein weiteres bevorzugtes Ausführungsbeispiel des Drehschwingungsdämpfers ist dadurch gekennzeichnet, dass die Dichtmembraneinrichtung mit einem radial inneren Abschnitt an der anderen Schwungmasse befestigt ist. Die Befestigung der Dichtmembraneinrichtung erfolgt zum Beispiel durch Nietelemente.

Ein weiteres bevorzugtes Ausführungsbeispiel des Drehschwingungsdämpfers ist dadurch gekennzeichnet, dass die Dichtmembraneinrichtung radial innen zwischen der anderen Schwungmasse und einem Ausgangsteil einer Drehschwingungsdämpfungseinrichtung montiert ist. Vorzugsweise ist die Dichtmembraneinrichtung radial innen zwischen der anderen Schwungmasse und dem Ausgangsteil der Drehschwingungsdämpfungseinrichtung eingeklemmt.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
Figur 1 einen erfindungsgemäßen Drehschwingungsdämpfer im Halbschnitt;
Figur 2 einen vergrößerten Ausschnitt aus Figur 1;
Figur 3 eine perspektivische Darstellung eines Ausschnitts eines Reibrings und
Figur 4 einen weiteren Halbschnitt durch den erfindungsgemäßen Drehschwingungsdämpfer.

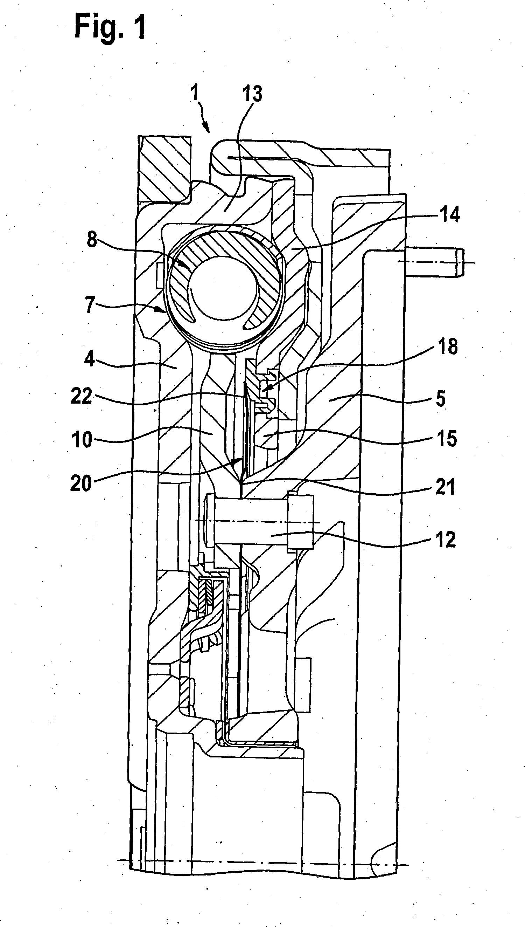

In Figur 1 ist ein Drehschwingungsdämpfer 1 dargestellt, der ein primäres Schwungrad 4 und ein sekundäres Schwungrad 5 umfasst. Die beiden Schwungräder 4 und 5, die auch als Schwungmassen bezeichnet werden, sind über eine Energiespeichereinrichtung 7 miteinander gekoppelt. Die Energiespeichereinrichtung 7 umfasst mehrere in Umfangsrichtung verteilt angeordnete Energiespeicherelemente 8, die vorzugsweise von Schraubendruckfedern gebildet werden. Das sekundäre Schwungrad 5 ist über einen Flansch 10, der durch Nietverbindungen 12 an dem sekundären Schwungrad 5 befestigt ist, mit diesem gekoppelt.

Das primäre Schwungrad 4 hat im Wesentlichen die Gestalt einer Kreisringscheibe, von der radial außen ein axialer Ansatz 13 ausgeht. Von dem freien Ende des axialen Ansatzes 13 erstreckt sich ein Ausläufer 14 radial nach innen. Der Ausläufer 14 hat im Wesentlichen die Gestalt einer im Bereich der Energiespeicherelemente 8 nach außen gewölbten Kreisringscheibe. An einem radial inneren Abschnitt 15 des Ausläufers 14 des primären Schwungrads 4 ist ein Reibring 18 befestigt. An der dem Flansch 10 zugewandten Oberfläche des Reibrings 18 liegt eine Dichtmembraneinrichtung 20 an. Die Dichtmembraneinrichtung 20 ist elastisch ausgebildet und wird auch als Dichtfedereinrichtung, Tellerfedermembran oder kurz Dichtmembran bezeichnet.

Die Dichtmembraneinrichtung 20 umfasst einen radial inneren Abschnitt 21, der auch als Innenkörper bezeichnet wird und der im Wesentlichen die Gestalt einer Kreisringscheibe aufweist, die mit mehreren Durchgangslöchern ausgestattet ist. Die Durchgangslöcher dienen zum Positionieren und/oder zur Befestigung der Dichtmembraneinrichtung 20 an einem anderen Bauteil. Der radial innere Abschnitt 21 ist einstückig mit einem radial äußeren Abschnitt 22 verbunden, der auch als Außenkörper bezeichnet wird. Der Außenkörper hat ebenfalls die Gestalt einer Kreisringscheibe. Die Dichtmembraneinrichtung 20 dient dazu, den Durchtritt von einem Schmiermedium, das im Bereich der Energiespeicherelemente 8 angeordnet ist, zu einer mit dem sekundären Schwungrad 5 gekoppelten Kupplungseinrichtung zu verhindern.

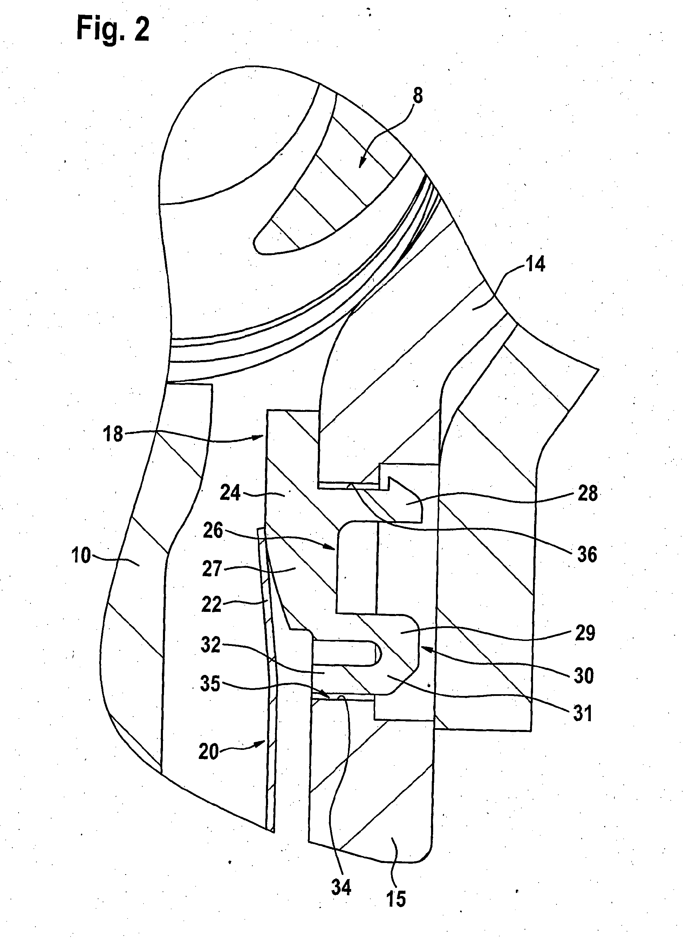

In Figur 2 ist ein Ausschnitt aus Figur 1 mit dem Reibring 18 vergrößert dargestellt. Der Reibring 18 umfasst einen Ringkörper 24, der im Wesentlichen die Gestalt einer geschlossenen Kreisringscheibe hat. Ein Schnappverbindungselement 26 ist einstückig mit dem Ringkörper 24 verbunden. Vorzugsweise sind zwei oder mehrere Schnappverbindungselemente über den Umfang des Ringkörpers 24 verteilt. Das Schnappverbindungselement 26 hat einen U-förmigen Querschnitt mit einer Basis 27, von der sich zwei Schenkel 28 und 29 in axialer Richtung erstrecken. Der Begriff axial bezieht sich auf die Drehachse der Schwungräder 4,5. Der Schenkel 28 bildet einen Schnapphaken.

Von dem Schenkel 29 geht ein Dichtelement 30 aus. Das Dichtelement 30 hat einen U-förmigen Querschnitt mit einer Basis 31, die einstückig mit dem Schenkel 29 verbunden ist. Von der Basis 31 geht ein weiterer Schenkel 32 aus, der eine Dichtlippe bildet. Der Schenkel 32 liegt an einer unteren Begrenzungsfläche 34 eines Durchgangslochs 35 an, das zur Aufnahme des Schnappverbindungselements 26 in dem radial inneren Abschnitt 15 des Ausläufers 14 ausgespart ist. Das Durchgangsloch 35 weist eine obere Begrenzungsfläche 36 auf, an der der den Schnapphaken bildende Schenkel 28 des Schnappverbindungselements 26 anliegt.

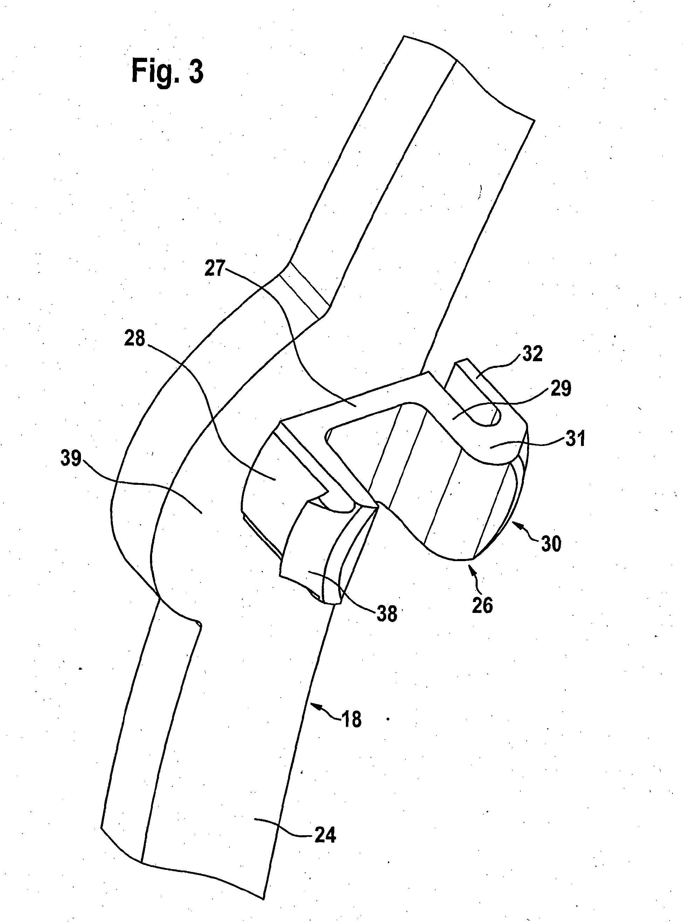

In Figur 3 ist der Ausschnitt des Reibrings 18 mit dem Schnappverbindungselement 26 perspektivisch dargestellt. Der an dem Ende des Schenkels 28 ausgebildete Schnapphaken ist in Figur 3 mit 38 bezeichnet. Im Bereich des Schnapphakens 38 ist an dem Ringkörper 24 des Reibrings 18 ein kreisscheibensegmentförmiger Ansatz 39 ausgebildet. Der Ansatz 39 schafft im Bereich des Schnappverbindungselements 26 eine vergrößerte Anlagefläche für den Reibring 18 an dem Ausläufer 14 der primären Schwungmasse 4.

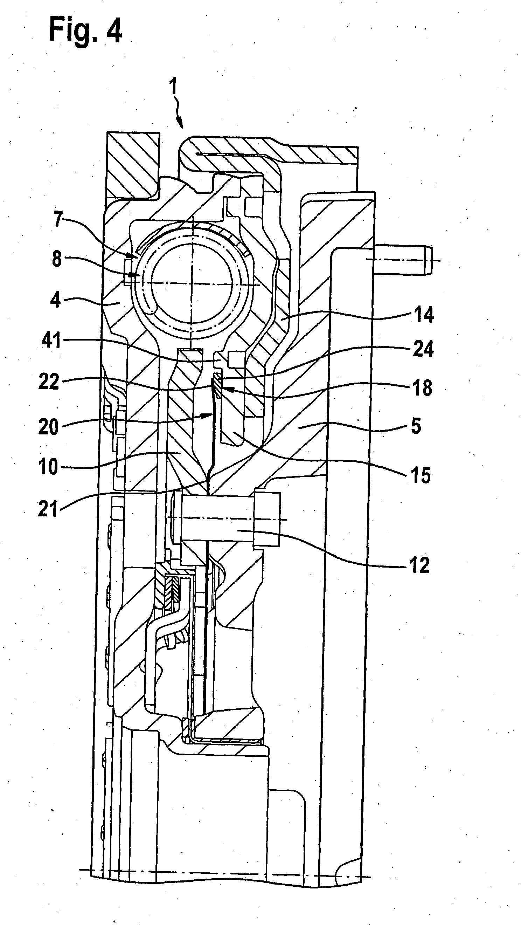

In Figur 4 ist ein Halbschnitt durch den Drehschwingungsdämpfer 1 aus Figur 1 an einer anderen Stelle dargestellt. In dem Halbschnitt sieht man, dass radial außerhalb des Ringkörpers 24 des Reibrings 18 Nietwarzen 41 aus dem Ausläufer 14 der primären Schwungmasse 4 herausstehen. Die Nietwarzen, von denen in Figur 4 nur eine Nietwarze 41 zu sehen ist, dienen zum einen dazu, den Reibring 18 zu zentrieren. Zum anderen verhindern die Nietwarzen 41, dass sich der Reibring 18 unter Fliehkrafteinwirkung bei hohen Drehzahlen zu stark verformt.

Durch die Kombination des Reibrings 18 mit der Dichtmembraneinrichtung 20 wird ein unerwünschtes Fressen verhindert. Außerdem wird durch diese Kombination eine robuste und stabile Grundreibung erzeugt. Die Streuung des Reibwerts kann klein gehalten werden.

### Bezugszeichenliste

1. Drehschwingungsdämpfer
4. primäres Schwungrad
5. sekundäres Schwungrad
7. Energiespeichereinrichtung
8. Energiespeicherelement
10. Flansch
12. Nietverbindung
13. axialer Ansatz
14. Ausläufer
15. radial innerer Abschnitt
18. Reibring
20. Dichtmembraneinrichtung
21. radial innerer Abschnitt
22. radial äußerer Abschnitt
24. Ringkörper
26. Schnappverbindungselement
27. Basis
28. Schenkel
29. Schenkel
30. Dichtelement
31. Basis
32. Schenkel
34. untere Begrenzungsfläche
35. Durchgangsloch
36. obere Begrenzungsfläche
38. Schnapphaken
39. Ansatz
41. Nietwarze

## Patentansprüche

1. Drehschwingungsdämpfer, insbesondere geteiltes Schwungrad, mit wenigstens zwei entgegen dem Widerstand einer Energiespeichereinrichtung relativ zueinander verdrehbaren Schwungmassen (4,5), zwischen denen eine elastische Dichtmembraneinrichtung (20) angeordnet ist, **dadurch gekennzeichnet, dass** zwischen der Dichtmembraneinrichtung (20) und der einen Schwungmasse (4) ein Reibring (18) eingespannt ist, der durch mindestens ein Schnappverbindungselement (26) an der einen Schwungmasse (4) verdrehgesichert befestigt ist

2. Drehschwingungsdämpfer nach Anspruch 1, **dadurch gekennzeichnet, dass** der Reibring (18) aus Kunststoff gebildet ist.

3. Drehschwingungsdämpfer nach einem der vorhergehenden Ansprüche, **dadurch gekennzeichnet, dass** die Dichtmembraneinrichtung (20) mit einem radial äußeren Abschnitt (22) an dem Reibring (18) anliegt.

4. Drehschwingungsdämpfer nach einem der Ansprüche 1 bis 3, **dadurch gekennzeichnet, dass** das Schnappverbindungselement (26) einen Schnapphaken (38) umfasst, der in ein Durchgangsloch (35) eingreift, das in der einen Schwungmasse (4) ausgespart ist.

5. Drehschwingungsdämpfer nach Anspruch 4, **dadurch gekennzeichnet, dass** das Schnappverbindungselement (26) einen im Wesentlichen U-förmigen Querschnitt mit einer Basis (27) aufweist, von der zwei Schenkel (28,29) ausgehen.

6. Drehschwingungsdämpfer nach Anspruch 5, **dadurch gekennzeichnet, dass** einer der Schenkel (28), bezogen auf den Reibring (18), radial außen angeordnet ist und den Schnapphaken (38) bildet.

7. Drehschwingungsdämpfer nach Anspruch 6, **dadurch gekennzeichnet, dass** von dem anderen Schenkel (29) ein Dichtelement (30) ausgeht, das zusammen mit dem anderen Schenkel (29) einen im Wesentlichen U-förmigen Querschnitt aufweist.

8. Drehschwingungsdämpfer nach einem der vorhergehenden Ansprüche, **dadurch gekennzeichnet, dass** an der einen Schwungmasse (4) radial außerhalb des Reibrings (18) Zentrierelemente (41) vorgesehen sind.

9. Drehschwingungsdämpfer nach Anspruch 8, **dadurch gekennzeichnet, dass** die Zentrierelemente (41) von Zentrierwarzen gebildet werden, die aus der einen Schwungmasse (4) herausstehen.

10. Drehschwingungsdämpfer nach einem der vorhergehenden Ansprüche, **dadurch gekennzeichnet, dass** die Dichtmembraneinrichtung (20) mit einem radial inneren Abschnitt (21) an der anderen Schwungmasse (5) befestigt ist.

11. Drehschwingungsdämpfer nach einem der vorhergehenden Ansprüche, **dadurch gekennzeichnet, dass** die Dichtmembraneinrichtung (20) radial innen zwischen der anderen Schwungmasse (5) und einem Ausgangsteil (10) des Drehschwingungsdämpfers (1) montiert ist.

## Claims

1. Torsional vibration damper, in particular split flywheel, having at least two flywheel masses (4, 5) which can be rotated relative to one another counter to the resistance of an energy store device, and between which flywheel masses (4, 5) an elastic sealing diaphragm device (20) is arranged, **characterized in that** a friction ring (18) is clamped between the sealing diaphragm device (20) and one flywheel mass (4), which friction ring (18) is fastened in a rotationally locked manner to one flywheel mass (4) by way of at least one snap-action connection element (26).

2. Torsional vibration damper according to Claim 1, **characterized in that** the friction ring (18) is formed from plastic.

3. Torsional vibration damper according to one of the preceding claims, **characterized in that** the sealing diaphragm device (20) bears with a radially outer section (22) against the friction ring (18).

4. Torsional vibration damper according to one of Claims 1 to 3, **characterized in that** the snap-action connection element (26) comprises a snap-action hook (38) which engages into a through hole (35) which is cut out in one flywheel mass (4).

5. Torsional vibration damper according to Claim 4, **characterized in that** the snap-action connection element (26) has a substantially U-shaped cross section with a base (27), from which two limbs (28, 29) emanate.

6. Torsional vibration damper according to Claim 5, **characterized in that** one of the limbs (28) is arranged radially on the outside, in relation to the friction ring (18), and forms the snap-action hook (38).

7. Torsional vibration damper according to Claim 6, **characterized in that** a sealing element (30) emanates from the other limb (29), which sealing element (30) has a substantially U-shaped cross section together with the other limb (29).

8. Torsional vibration damper according to one of the preceding claims, **characterized in that** centring elements (41) are provided radially outside the friction ring (18) on one flywheel mass (4).

9. Torsional vibration damper according to Claim 8, **characterized in that** the centring elements (41) are formed by centring projections which protrude out of one flywheel mass (4).

10. Torsional vibration damper according to one of the preceding claims, **characterized in that** the sealing diaphragm device (20) is fastened with a radially inner section (21) to the other flywheel mass (5).

11. Torsional vibration damper according to one of the preceding claims, **characterized in that** the sealing diaphragm device (20) is mounted radially on the inside between the other flywheel mass (5) and an output part (10) of the torsional vibration damper (1).

## Revendications

1. Amortisseur d'oscillations en torsion, en particulier volant d'inertie divisé, comprenant au moins deux masses d'inertie (4, 5) pouvant tourner l'une par rapport à l'autre à l'encontre de la résistance d'un dispositif accumulateur d'énergie, entre lesquelles est disposé un dispositif à membrane d'étanchéité élastique (20), **caractérisé en ce qu'**entre le dispositif à membrane d'étanchéité (20) et l'une des masses d'inertie (4) est enserrée une bague de frottement (18) qui est fixée de manière solidaire en rotation par au moins un élément de connexion par encliquetage (26) à l'une des masses d'inertie (4).

2. Amortisseur d'oscillations en torsion selon la revendication 1, **caractérisé en ce que** la bague de frottement (18) est formée de plastique.

3. Amortisseur d'oscillations en torsion selon l'une quelconque des revendications précédentes, **caractérisé en ce que** le dispositif à membrane d'étanchéité (20) s'applique avec une portion radialement extérieure (22) contre la bague de frottement (18).

4. Amortisseur d'oscillations en torsion selon l'une quelconque des revendications 1 à 3, **caractérisé en ce que** l'élément de connexion par encliquetage (26) comprend un crochet d'encliquetage (38) qui vient en prise dans un trou traversant (35) pratiqué dans l'une des masses d'inertie (4).

5. Amortisseur d'oscillations en torsion selon la revendication 4, **caractérisé en ce que** l'élément de connexion par encliquetage (26) présente une section transversale essentiellement en forme de U avec une base (27) de laquelle partent deux branches (28, 29).

6. Amortisseur d'oscillations en torsion selon la revendication 5, **caractérisé en ce que** l'une des branches (28), par rapport à la bague de frottement (18), est disposée radialement à l'extérieur et forme le crochet d'encliquetage (38).

7. Amortisseur d'oscillations en torsion selon la revendication 6, **caractérisé en ce qu'**un élément d'étanchéité (30) part de l'autre branche (29), et présente, conjointement avec l'autre branche (29), une section transversale essentiellement en forme de U.

8. Amortisseur d'oscillations en torsion selon l'une quelconque des revendications précédentes, **caractérisé en ce que** des éléments de centrage (41) sont prévus sur l'une des masses d'inertie (4) radialement à l'extérieur de la bague de frottement (18).

9. Amortisseur d'oscillations en torsion selon la revendication 8, **caractérisé en ce que** les éléments de centrage (41) sont formés par des picots de centrages qui font saillie depuis l'une des masses d'inertie (4).

10. Amortisseur d'oscillations en torsion selon l'une quelconque des revendications précédentes, **caractérisé en ce que** le dispositif à membrane d'étanchéité (20) est fixé avec une portion radialement interne (21) à l'autre masse d'inertie (5).

11. Amortisseur d'oscillations en torsion selon l'une quelconque des revendications précédentes, **caractérisé en ce que** le dispositif à membrane d'étanchéité (20) est monté radialement à l'intérieur entre l'autre masse d'inertie (5) et une partie de sortie (10) de l'amortisseur d'oscillations en torsion (1).
